# EUROPÄISCHE PATENTANMELDUNG

(11) **EP 3 599 263 A1**
(43) Veröffentlichungstag der Anmeldung: **29.01.2020**
(21) Anmeldenummer: 18185847.3
(22) Anmeldetag: 26.07.2018
(51) Int. Cl.: C09J 161/28, C08L 7/00

(54) **HAFTMISCHUNGEN FÜR KAUTSCHUKE**

(71) Anmelder: LANXESS Deutschland GmbH, 50569 Köln (DE)
(72) Erfinder: WEIDENHAUPT, Hermann-Josef, 50259 Pulheim (DE); WIEDEMEIER-JARAD, Melanie, 41540 Dormagen (DE); MEESE, Stephen, 51381 Leverkusen (DE); FISCHER, Jens-Hendrik, 51375 Leverkusen (DE); DE SMET, Nele, 9320 Nieuwerkerken (BE)

(57) **Zusammenfassung**

Die vorliegende Erfindung betrifft Haftmischungen enthaltend Resorcin und/oder Resorcinester, Melaminformaldehydether und Sulfenamid-Derivate sowie Kieselsäure, für deren Einsatz in Kautschuken, deren Herstellung, daraus hergestellte Vulkanisate und Verbundartikel und deren Verwendung.

## Beschreibung

Die vorliegende Erfindung betrifft Haftmischungen enthaltend Resorcin und/oder Resorcinester, Melaminformaldehydether und Sulfenamid-Derivate sowie Kieselsäure für deren Einsatz in Kautschuken, deren Herstellung, daraus hergestellte Vulkanisate und Verbundartikel und deren Verwendung.

Verbundartikel, wie Reifen, Förderbänder, Riemen aller Art, wie z.B. Keilriemen, verstärkte Schläuche, Feuerwehrschläuche oder beschichtete Gewebe müssen sowohl elastisch sein, als auch Zug- oder Druckbelastung widerstehen. Da Elastomere sich bei Belastung verformen, ist zur Kraftübertragung ein Festigkeitsträger erforderlich. Solche Festigkeitsträger bestehen je nach Belastung aus einer oder mehreren Lagen Textil- oder Stahlcord, teilweise werden beide miteinander kombiniert.

Um eine Bindung bzw. Haftung der Elastomere an den jeweiligen Festigkeitsträger zu erreichen, kann ein sogenanntes Haftsystem direkt auf den Festigkeitsträger aufgebracht, oder das Haftsystem in den Kautschuk eingebracht, oder beide Methoden miteinander kombiniert werden.

Zur Beschichtung von Festigkeitsträgern vorgesehene Haftsysteme werden als Resorcin-Formaldehyd-Latex (RFL) - bzw. Resorcin-Formaldehyd-Silica (RFS)-System bezeichnet. Beides sind disperse Systeme. Der wesentliche Unterschied zwischen den beiden Systemen liegt in der Polarität des Mediums. RFL-Systeme sind Dispersionen in dem polaren Medium Wasser, RFS-Systeme können als Dispersion in dem unpolaren Medium der Kautschukmischung aufgefasst werden. Eine dritte Komponente wie beispielsweise kieselsäurebasierte Füllstoffe übernimmt die Funktion eines Trägers.

In handelsüblichen Haftvermittlersystemen werden häufig Resorcin bzw. Resorcinharze eingesetzt (sogenannte RFS-Haftsysteme), die zwischen den Gewebeeinlagen oder Stahlcord mit den Gummicompounds im Reifenbau Anwendung finden. Des Weiteren erhalten diese Formaldehydspender und Kieselsäure in einer Kautschukmischung. Bei der Wärmebehandlung der Mischung entsteht aus Resorcin und Formaldehydspender ein Resorcin-Formaldehyd-Harz, das die Bindung zwischen Gummi und dem Festigkeitsträger erhöht.

Aus EP-A 2960278 ist bekannt, Dicyclohexylbenzothiazyl-sulfenamid (DCBS) in Kautschuk als auch in Kautschuk-basierten Haftmischungen einzusetzen.

Aufgabe der vorliegenden Erfindung ist es, einen effektiven Beschleuniger aufzufinden, die es ermöglicht, sowohl Gummi-Gewebe- sowie Gummi- Metall-Haftung mit einem verbesserten Eigenschaftsprofil für die Kautschuk verarbeitende Industrie zur Verfügung zu stellen, bei gleichbleibender Qualität, der mit solchen Präparationen hergestellten Vulkanisate. Insbesondere sollen weder deren gummitechnische Eigenschaften sowie deren gute Hafteigenschaften zwischen Ein- oder Auflage und Vulkanisate vermindert werden. Des Weiteren soll die Verarbeitbarkeit einfach und damit das Verfahren wirtschaftlich sein.

Dem Fachmann ist bekannt, dass die Vernetzungspunkte sowie die Vernetzungsdichte eine wichtige Rolle in der Vulkanisation spielen.

Ein Vorteil der Schwefel-Vernetzung ist die Möglichkeit, eine Gummi-Metall-Adhäsion durch dieses Vulkanisationsverfahren zu erzeugen. Die Metalloberfläche muss dazu mit einem Messingüberzug beschichtet sein, um eine Sulfidierung zu ermöglichen. Eine mechanische Verankerung des Gummis an der Metalllegierung entsteht durch Cu-Sx-C-Strukturen an der Grenzschicht beider Materialien und ist abhängig von der Vulkanisationsgeschwindigkeit, dem Schwefelgehalt und der Kautschukart.

Eine weit verbreitete Meinung ist, dass die Sulfidierung an der Metalloberfläche in Konkurrenz zur Vulkanisationsgeschwindigkeit steht und, dass das Gummi umso besser am Metall haftet, je langsamer die Vulkanisation der Kautschukketten verläuft, wobei die Verbindung von Gummi und Metall umso besser, je mehr Polysulfid-Netzstellen/Netzknoten gebildet werden. Die verzögernde Wirkung von DCBS hat einen positiven Effekt auf die Adhäsion. Gummi-Metall-Verbindungen, die mit DCBS als Vulkanisationsbeschleuniger erzeugt worden sind, sind deutlich stabiler und haltbarer als im Vergleich zu CBS-basierten Verbindungen.

Die Qualität der Kautschukformkörper ist dabei vor allem geprägt von den Schwefelbücken als Verknüpfung, wobei zwischen mono-, di- und polysulfidischen Verknüpfungen unterschieden wird. Idealerweise sollte der Anteil an monosulfidischen Verknüpfungsstellen möglichst gering sein.

Es ist bekannt, dass die Vernetzungsstruktur (Crosslink Structure) von den handelsüblichen Sulfenamiden, wie CBS (N-Cyclohexyl-2-benzothiazylsulfenamid) oder DCBS (N,N-Dicyclohexyl-2-benzothiazylsulfenamid), stark variieren.

CBS bildet bekanntermaßen im Naturkautschuk (NR) bei gleicher molarer Konzentration ungefähr 1/3 monosulfidische (S1), 1/3 disulfidische (S2) sowie 1/3 polysulfidische (Sx)Vernetzungsstellen.

Dahingegen bildet das DCBS mehr polysulfidische Vernetzungsstellen als im Vergleich zum CBS. Dieses zeigt sich in Vulkanisaten wieder, die eine hohe Zugfestigkeit im Vergleich zu CBS basierten Vulkanisaten aufweisen.

Des Weiteren sollte die Beschleunigung in den Kautschuk-Haftmischungen so gewählt werden, dass die Fließzeit einen genügend weiten Spielraum für die Reaktion der Formaldehyd-Abspaltung bzw. für die Harzbildung lässt, damit die Bindung weitgehend zustandekommen kann. Deshalb hat sich das DCBS mit seinem verzögerten Vulkanisationseinsatz immer wieder ganz besonders bewährt. Dem Fachmann ist bekannt, dass gerade für die Gummi-Stahlcord-Haftung speziell der Einsatz von DCBS empfohlen wird.

Überraschenderweise wurde nun gefunden, dass eine Haftmischung, enthaltend Resorcin und/ oder Resorcinester, Melaminformaldehydether und mindestens ein mono- oder di-Benzothiazylsulfenamid-Derivat sowie Kieselsäure, hervorragende Hafteigenschaften zeigt.

Gegenstand der vorliegenden Erfindung sind Haftmischungen, enthaltend
- Resorcin und/oder Resorcinester der Formel (I) 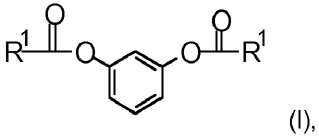 worin
   alle Reste R¹ gleich oder verschieden sind und Wasserstoff (für Resorcin) oder einen geradkettigen oder verzweigten C₁-C₁₈-Alkylrest oder einen Phenylrest, vorzugsweise Methyl oder Stearyl bedeuten,
   und
- mindestens einen Melaminformaldehydether der Formel (II) 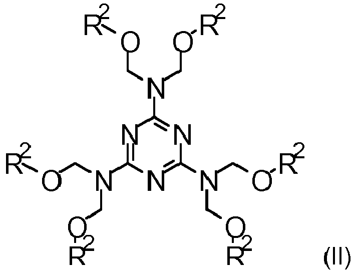 worin
   alle Reste R² gleich oder verschieden sind und Wasserstoff oder einen geradkettigen oder verzweigten C₁-C₄-Alkylrest oder einen Phenylrest, bevorzugt Wasserstoff oder Methyl, besonders bevorzugt Methyl bedeutet, wobei aber nicht mehr als 5, vorzugsweise nicht mehr als 4, besonders bevorzugt nicht mehr als 3, ganz besonders bevorzugt nicht mehr als 2 und meist bevorzugt nicht mehr als 1 Rest R² für Wasserstoff steht
   und/oder Polymere Melaminformaldehydether der Formel (III),
- mindestens ein Sulfenamid der Formel (III) 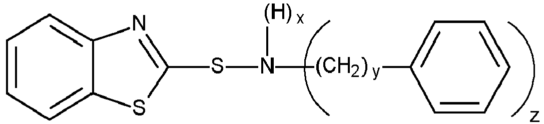 mit x = 0 oder 1 und z = 1 oder 2, wobei z und x in Summe = 2 sind und y = 1 - 4,
- mindestens einen kieselsäurebasierenden Füllstoff, bevorzugt Fällungskieselsäure oder pyrogene Kieselsäure, besonders bevorzugt Fällungskieselsäure.

Als Resorcinester sind Verbindungen der Formel (I) mit 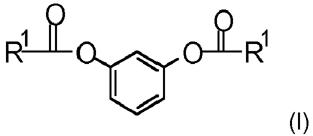 worin R¹ Methyl und/oder Stearyl bedeuten, bevorzugt. Resorcin kann dabei als handelsübliche Verbindung, z.B. erhältlich bei der Firma LANXESS Deutschland GmbH, eingesetzt werden.

Als Melaminformaldehydether der Formel (II) 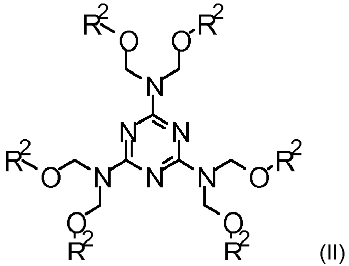 sind solche bevorzugt, in denen R² Methyl bedeutet, bzw. solche, in denen 2 bis 4 der Reste R² Methyl entsprechen.

In einer Ausführungsform der vorliegenden Erfindung können anstelle der oder zusammen mit den Verbindungen der Formel (II) auch Polymere, insbesondere Di-, Tri-, oder Tetramere davon eingesetzt werden, worunter Verbindungen zu verstehen sind , bei denen jeweils ein oder mehrere der Aminofunktionen einer Verbindung der Formel (II) anstelle eines Rests CH₂ORq (wobei q = 3, 4, 5, 6,7 oder 8 sein kann) durch -CH₂-Gruppen und/oder -CH₂-O-CH₂- mit einer weiteren entsprechenden Verbindung Formel (II) verbunden sind. Bei der nachfolgenden Beschreibung der verschiedenen Ausführungsformen der vorliegenden Erfindung sind die Verbindungen der Formel (II) so zu verstehen, dass auch die Polymere, insbesondere Di-, Tri-, oder Tetramere der Verbindungen umfasst sind. Auch diese vorgenannten Polymere sind handelsüblich.

Als Verbindungen der Formel (III) 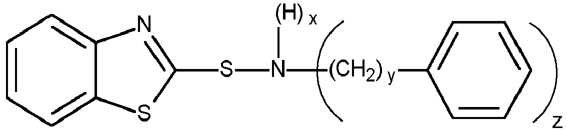 sind solche Verbindungen bevorzugt, in denen mit x = 0, y = 1 und z = 2 sind, d.h. N,N-Dibenzyl-2-benzothiazylsulfenamid (DBzBS)).

Bei den erfindungsgemäß eingesetzten Verbindungen der Formel (III) handelt es sich um handelsübliche Verbindungen. Sie können alternativ nach dem in der EP-A-721946 beschriebenen Verfahren hergestellt werden, so z.B. die bevorzugte Verbindung der Formel (III) mit x = 0, y = 1 und z = 2 über die Umsetzung von 2,2'-Dibenzothiazolyldisulfid mit Dibenzylamin in einem wasserfreien Alkohol.

Als kieselsäurebasierder Füllstoff wird vorzugsweise verwendet:
- Kieselsäure, insbesondere Fällungskieselsäure oder pyrogene Kieselsäure, hergestellt vorzugsweise durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm, und/oder
- natürliche Silikate, wie Kaolin und andere natürliche vorkommende Kieselsäuren.

In einer bevorzugten Ausführungsform der Erfindung enthält die erfindungsgemäße Haftmischung zudem ein oder mehrere kieselsäurebasierende Füllstoffe in der Form, dass auf diese Resorcin und/oder Resorcinester und/oder der Melaminformaldehydether aufgebracht wurden.

Generell können die Resorcin und/oder Resorcinester der Formel (I) und Melaminformaldehydether der Formel (II) in einem beliebigen Verhältnis zueinander eingesetzt werden.

In einer bevorzugten Ausführungsform beträgt die Summe der Resorcinester der Formel (I) und der Melaminformaldehydether der Formel (II) wenigstens 20 Gew.-%.

Besonders bevorzugt sind dabei Haftmischungen, in denen Gesamtanteil an Resorcin bzw. den Resorcinestern der Formel (I), Melaminformaldehydethern der Formel (II) und/oder Polymeren und Sulfenamid 20 - 80 Gew.%, insbesondere 25 - 55 Gew.% bezogen auf die gesamte Haftmischung beträgt, wobei der Anteil an Verbindungen der Formel (III) bei 0,1 bis 10 Gew%, vorzugsweise 0,15 bis 1,5 Gew.% liegt. Idealerweise werden Recorcin bzw. die Resorcinester der Formel (I) sowie Melaminformaldehydethern der Formel (II) auf Kieselsäure als Träger aufgebracht.

In den erfindungsgemäßen Haftmischungen beträgt der Gesamtanteil an Resorcinestern der Formel (I), Melaminformaldehydethern der Formel (II) und/oder Polymeren bevorzugt 20 - 80 Gew.%, insbesondere 25 - 55 Gew.% und der Anteil an Sulfenamid der Formel (III) 0,1 - 10 Gew%, bezogen auf die gesamte Haftmischung mit Kieselsäure.

In einer weiteren Ausführungsform der vorliegenden Erfindung enthält die erfindungsgemäße Haftmischung zusätzlich Ruße, insbesondere Ruße, die nach dem Flammruß, Furnace- und/oder Gasruß-Verfahren hergestellt wurde.

Es können selbstverständlich zusätzliche Füllstoffe verwendet werden. Insbesondere sind hierfür nach dem Flammruß, Furnace- oder Gasruß-Verfahren hergestellt Ruße geeignet, welche BET-Oberflächen von 20 - 200 m²/g besitzen, wie SAF-, ISAF-, IISAF-, HAF-, FEF- oder GPF-Ruße.

Diese erfindungsgemäßen Haftmischungen werden vorzugsweise durch Zusammenmischen der einzelnen Komponenten der Mischung hergestellt, wobei es bevorzugt ist Resorcin und/oder Resorcinester der Formel (I) und Melaminformaldehydether auf Kieselsäure aufzubringen.

In einer weiteren Ausführungsform der Erfindung enthalten die erfindungsgemäßen Haftmischungen zusätzlich Kautschuk, Vernetzer, Füllstoffe und gegebenenfalls weitere Additive.

Als Kautschuk im Sinne der Erfindung einsetzbar ist Naturkautschuk (NR) und/oder Synthesekautschuke. Bevorzugte Synthesekautschuke sind beispielsweise

| | |
|---|---|
| BR | - Polybutadien |
| ABR | - Butadien/Acrylsäure-C₁-C₄-alkylester-Copolymerisat |
| CR | - Polychloropren |
| IR | - Polyisopren |
| SBR | - Styrol/Butadien-Copolymerisate mit Styrolgehalten von 1 - 60, vorzugsweise 20 - 50 Gew-% |
| IIR | - Isobutylen/Isopren-Copolymerisate |
| NBR | - Butadien/Acrylnitril-Copolymerisate mit Acrylnitrilgehalten von 5-60, vorzugsweise 10 - 50 Gew.-% |
| HNBR | - teilhydrierter oder vollständig hydrierter NBR-Kautschuk |
| EPDM | - Ethylen/Propylen/Dien-Copolymerisate. |

Dabei ist der Einsatz der Kautschuke in Form der handelsüblichen Kautschuke möglich. Gegenstand der Erfindung sind zudem Verfahren zur Herstellung der erfindungsgemäßen Haftmischungen wonach:
- zunächst der kieselsäurebasierende Füllstoff mit Melaminformaldehydether(n) der Formel (II) und/oder Polymeren davon und anschließend mit Resorcinester(n) der Formel (I) beaufschlagt werden, oder
- der kieselsäurebasierende Füllstoff gleichzeitig mit Melaminformaldehydether(n) der Formel (II) und/oder Polymeren davon und Resorcinester(n) der Formel (I) beaufschlagt werden, oder
- zuerst der kieselsäurebasierende Füllstoff mit Resorcinester(n) der Formel (I) und anschließend mit Melaminformaldehydether(n) der Formel (II) und/oder Polymeren davon beaufschlagt wird, oder
- der kieselsäurebasierende Füllstoff mit einer Mischung aus Melaminformaldehydether(n) der Formel (II) und/oder Polymeren davon und Resorcinester(n) der Formel (I) beaufschlagt, oder
- Resorcinester der Formel (I) und Melaminformaldehydether der Formel (II) und/oder Polymere davon jeweils separat mit dem kieselsäurebasierenden Füllstoff gemischt und anschließend die Mischungen vereint werden und

im Anschluss dieser mit dem Sulfenamid der Formel (III) in den Kautschuk zumischt werden.

Sollten weitere Additive, wie zusätzliche Füllstoffe, Vernetzer, Vulkanisationsbeschleuniger und Kautschukhilfsmittel oder auch Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol, Silane und Reversionsschutzmittel, in der Mischung eingesetzt werden, so werden diese gemeinsam mit den zuvor genannten Komponenten in den Kautschuk eingerührt.

Weiterhin können im Mischverfahren die nachstehend im Detail aufgeführten Additive separat oder in beliebiger Mischung zugegeben werden, wie zusätzliche Füllstoffe, Vernetzer, Vulkanisationsbeschleuniger und Kautschukhilfsmittel etc.

Zur Herstellung der Haftmischung wird vorzugsweise ein Innenmischer mit nachgeschaltetem Mischwalzwerk genutzt. Ebenfalls möglich ist es, die Haftmischung nur auf dem Mischwalzwerk herzustellen, bei Mischungstemperaturen < 110°C, vorzugsweise zwischen 20 - 90°C.

Des Weiteren können die Haftmischungen einen oder mehrere Vernetzer enthalten. Hierfür sind insbesondere Schwefel-basierende oder peroxidische Vernetzer geeignet, wobei Schwefel-basierte Vernetzer besonders bevorzugt sind.

Als Vernetzer kann Schwefel in elementarer löslicher oder unlöslicher Form oder in Form von Schwefelspendern eingesetzt werden. Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT) und Tetramethylthiuramdisulfid (TMTD) in Frage.

Grundsätzlich kann die Vernetzung der Elastomermischung mit Schwefel oder Schwefelspendern allein erfolgen, oder zusammen mit weiteren Vulkanisationsbeschleunigern, wofür insbesondere Dithiocarbamate, Thiurame, Thiazole, Xanthogenate, bi- oder polycyclische Amine, Guanidinderivate, Dithiophosphate, Caprolactame und Thioharnstoffderivate geeignet sind. Weiterhin sind auch Zinkdiamindiisocyanat, Hexamethylentetramin, 1,3-Bis(citraconimidomethyl)benzol sowie zyklische Disulfane geeignet. Bevorzugt enthalten die erfindungsgemäßen Kautschukmischungen Schwefel-basierende Vernetzer und Vulkanisationsbeschleuniger.

Als peroxidische Vernetzer werden vorzugsweise Bis(2,4-dichlorbenzyl)peroxid, Dibenzoylperoxid, Bis(4-chlorbenzoyl)peroxid, 1,1-Bis(t-butylperoxy)-3,3,5-trimethylcylo-hexan, tert-Butylperbenzoat, 2,2-Bis(t-butylperoxy)butan, 4,4-Di-tert-butylperoxynonylvalerat, Dicumylperoxid, 2,5-Dimethyl-2,5-di(tert-butylperoxy)hexan, tert-Butylcumylperoxid, 1,3-Bis(t-butylperoxyisopropyl)benzol, Di-tert-butylperoxid und 2,5-Dimethyl-2,5-di(tert-butylperoxy)-3-hexin eingesetzt.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellitat, Ethylenglycoldi(meth)acrylat, Butandioldi(meth)acrylat, Trimetylolpropan-tri(meth)acrylat, Zinkdiacrylat, Zinkdimethacrylat, 1,2-Polybutadien oder N,N'-m-Phenylen-dimaleinimid geeignet.

Besonders bevorzugt werden als Vernetzungsmittel Schwefel, Magnesiumoxid und/oder Zinkoxid eingesetzt.

Die Vernetzungsmittel und Vulkanisationsbeschleuniger werden bevorzugt in Mengen von 0,1 bis 10 phr, besonders bevorzugt von 0,1 bis 5 phr, eingesetzt.

Die Haftmischungen können weitere Additive, enthalten, wie Reaktionsbeschleuniger, Alterungsschutzmittel, Wärmestabilisatoren, Lichtschutzmittel, Antioxidantien, insbesondere Ozonschutzmittel, Flammschutzmittel, Verarbeitungshilfsmittel, Schlagzähfestigkeitsverbesserer, Weichmacher, Tackifier, Treibmittel, Farbstoffe, Pigmente, Wachse, Streckmittel, organische Säuren, Verzögerer, Metalloxide und Aktivatoren, insbesondere Triethanolamin, Polyethylenglykol, Hexantriol, Silane und Reversionsschutzmittel.

Diese Additive werden in üblichen Mengen eingesetzt, die sich insbesondere nach dem Verwendungszweck der Vulkanisate richten. Übliche Mengen sind 0,1 bis 30 phr.

Als Alterungsschutzmittel werden bevorzugt alkylierte Phenole, styrolisiertes Phenol, sterisch gehinderte Phenole, wie vorzugsweise 2,6-Di-tert.-butylphenol, 2,6-Di-tert-butyl-p-kresol (BHT), 2,6-Di-tert.-butyl-4-ethylphenol, estergruppenhaltige sterisch gehinderte Phenole, thioetherhaltige sterisch gehinderte Phenole, 2,2'-Methylen-bis-(4-methyl-6-tert-butylphenol) (BPH) sowie sterisch gehinderte Thiobisphenole verwendet.

Falls eine Verfärbung des Kautschuks ohne Bedeutung ist, können auch aminische Alterungsschutzmittel z.B. Mischungen aus Diaryl-p-phenylendiaminen (DTPD), octyliertes Diphenylamin (ODPA), Phenyl-α-naphthylamin (PAN), Phenyl-β-naphthylamin (PBN), vorzugsweise solche auf Phenylendiaminbasis, z.B. N-Isopropyl-N'-phenyl-p-phenylendiamin, N-1,3-Dimethylbutyl-N'-Phenyl-p-phenylendiamin (6PPD), N-1,4-Dimethylpentyl-N'-phenyl-p-phenylendiamin (7PPD), N,N'-bis-(1,4-Dimethylpentyl)-p-phenylendiamin (77PD) eingesetzt werden.

Weitere Alterungsschutzmittel sind beispielsweise Phosphite, wie vorzugsweise Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI), welche meist in Kombination mit obigen phenolischen Alterungsschutzmitteln eingesetzt werden. TMQ, MBI und MMBI werden vor allem für NBR-Kautschuke verwendet, welche peroxidisch vulkanisiert werden.

Die Ozonbeständigkeit kann durch Antioxidantien, wie beispielsweise N-1,3-Dimethylbutyl-N'-phenyl-p-phenylendiamin (6PPD), N-1,4-Dimethylpentyl-N'-phenyl-p-phenylendiamin (7PPD), N,N'-Bis- (1,4-dimethylpentyl)-p-phenylendiamin (77PD), Enolether oder cyclische Acetale verbessert werden.

Verarbeitungshilfsmittel sollen idealerweise zwischen den Kautschuk-Partikeln wirksam werden und Reibungskräften beim Mischen, Plastifizieren und Verformen entgegenwirken. Als Verarbeitungshilfsmittel können die erfindungsgemäßen Haftmischungen alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C-Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Um die Entflammbarkeit zu vermindern und die Rauchentwicklung beim Verbrennen zu verringern, kann die erfindungsgemäße Haftmischungszusammensetzung auch Flammschutzmittel enthalten. Hierfür werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Vor der Vernetzung können dem Vulkanisat auch weitere Kunststoffe beigefügt werden, welche beispielsweise als polymere Verarbeitungshilfsmittel oder Schlagzähigkeitsverbesserer wirken. Diese Kunststoffe werden bevorzugt gewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C₁- bis C₁₀-Alkoholen, wobei Polyacrylate mit gleichen oder verschiedenen Alkoholresten aus der Gruppe der C₄- bis C₈-Alkohole, insbesondere des Butanols, Hexanols, Octanols und 2-Ethylhexanols, Polymethylmethacrylat, Methylmethacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere besonders bevorzugt sind.

In einer bevorzugten Ausführungsform enthält die Elastomermischung 0,1 bis 50 phr des Reversionsschutzmittels 1,6-Bis(N,N-dibenzylthiocarbamoyldithio)hexan (CAS-Nr. 151900-44-6).

Die erfindungsgemäßen Haftmischungen führen zu einer guter Haftung zwischen Gummi und Polyamid-, Viskose-, Polyester-, Aramid- oder Stahlcord; ganz besonders zwischen Gummi und Textilfasern.

Gegenstand der vorliegenden Erfindung ist zudem die Verwendung der erfindungsgemäßen Mischungen als Haftvermittler in Kautschukmischungen, bevorzugt in mit Schwefel vernetzbaren Kautschukmischungen, besonders bevorzugt in Natur- und/oder Synthesekautschuke enthaltenden Kautschukmischungen.

Ein weiterer Gegenstand der Erfindung sind Vulkanisate erhältlich durch Vulkanisation der erfindungsgemäßen kautschukhaltigen Haftmischungen, vorzugsweise bei Massetemperaturen von 100 bis 200°C, besonders bevorzugt bei Massetemperaturen von 130 bis 180°C sowie das diesbezügliche Verfahren zur Herstellung von Vulkanisaten durch Vulkanisation der erfindungsgemäßen Haftmischungen vorzugsweise bei Massetemperaturen von 100 bis 200°C, besonders bevorzugt bei Massetemperaturen von 130 bis 180°C.

Ebenso Gegenstand der Erfindung sind Verbundartikel, bevorzugt in Form von Reifen, Förderbändern, Riemen aller Art, Keilriemen, verstärkten Schläuchen, Feuerwehrschläuchen oder beschichteten Geweben, enthaltend die erfindungsgemäßen Vulkanisate.

Die nachfolgenden Beispiele dienen der Erläuterung der Erfindung, ohne dabei limitierend zu wirken.

### Ausführungsbeispiele:

Beispiele der Herstellung der Haftsysteme:
Mischung Referenz, sowie die Kautschukmischungen 1 und 2 wurden wie folgt hergestellt:

**Tabelle 1:**

| | Haftmischung 1 (Erf.) | Haftmischung 2 (Erf.) |
|---|---|---|
| Kieselsäure CAS-No. 7631-86-9 | 12,7 | 12,7 |
| Melaminformaldehydether der Formel (II) mit R² = Wasserstoff (4x) und Methyl (2x), auf Kieselsäure (50%) | 4,6 | 4,6 |
| Resorcin und Stearinsäure (2:1) | 3,4 | 3,4 |
| Benzothiazylsulfenamid der Formel (III) mit x = 0, y = 1 und z = 2 (DBzBS) | 0,7 | 0,9 |

Für die Herstellung der Kautschuk-Mischungen 1 und 2 wurde zunächst die Kieselsäure mit Melaminformaldehydether der Formel (II) versetzt und anschließend mit Resorcin und Stearinsäure beaufschlagt, wobei die Einsatzmengen und die Edukte der Tabelle 1 entsprechen. Im Anschluss wurden diese Mischungen jeweils mit dem Sulfenamid der Formel (III) versetzt.

### Herstellung der Kautschukmischung aus den Haftmischungen 1 und 2

In einem Innenmischer wurden zum Naturkautschuk nacheinander die Haftmischung 1 bzw. Haftmischung 2 und anschließend Ruß sowie Mineralöl hinzugegeben. Die Einsatzstoffe und Einsatzmengen ergeben sich aus Tabelle 2. Der Innenmischer hatte eine Temperatur < 90°C und die Verweilzeit der Haftkomponenten war kleiner 5 Minuten.

Auf dem Walzwerk wurden anschließend je nach Mischung entweder Dicyclohexylbenzothiazylsulfenamid / Schwefel für Referenz oder das Benzothiazylsulfenamid der Formel (III) mit x = 0, y = 1 und z = 2, Schwefel sowie die anderen Bestandteile für die Kautschuk-Mischungen 1 bzw. 2 in den in Tabelle 2 angegebenen Mengen eingearbeitet.

Das Mischwalzwerk hatte eine Temperatur von kleiner 40°C. Die so gewonnenen Walzfelle wurde für die Messung von Weiterreißwiderstand und Rückprallelastizität genutzt.

Der Innenmischer hatte eine Temperatur < 90°C. Verweilzeit der Haftkomponenten war kleiner 5 Minuten.

Ein weiterer Teil der Mischungen wurden in einer elektrischen Heizpresse vulkanisiert. Die Vernetzungstemperatur betrug T = 150°C, der Pressdruck p = 100 bar. Die Vernetzungszeit t= 3180 Sekunden bei einem Umsatz von t95.

**Tabelle 2: Kautschuk-Rezeptur**

| | Referenz gemäß EP-A-2960278 | Kautschuk-Mischung 1 (Erf.) | Kautschuk-Mischung 2 (Erf.) |
|---|---|---|---|
| Naturkautschuk TSR | 100 | 100 | 100 |
| Ruß | 50 | 50 | 50 |
| Kieselsäure CAS-No. 7631-86-9 | 12,7 | 12,7 | 12,7 |
| Mineralöl | 4 | 4 | 4 |
| Zinkoxid | 8 | 8 | 8 |
| Melaminformaldehydether der Formel (II) mit R² = Wasserstoff (4x) und Methyl (2x), auf Füllstoff (50 %) | 4,6 | 4,6 | 4,6 |
| Resorcin und Stearinsäure (2:1) | 3,4 | 3,4 | 3,4 |
| SCHWEFEL | 4,5 | 4,5 | 4,5 |
| Dicyclohexylbenzothiazyl-sulfenamid (StdT) | 0,7 | | |
| Benzothiazylsulfenamid der Formel (III) mit x = 0, y = 1 und z = 2 (DBzBS) | | 0,7 | 0,9 |

| | | Handelsname | Hersteller/Vertrieb |
|---|---|---|---|
| Naturkautschuk | | TSR / RSS 3 DEFO 700 | Handelshaus Weber & Schaer |
| Ruß | | CORAX N 326 | Degussa-Evonik GmbH |
| Kieselsäure | | VULKASIL S | LANXESS Deutschland GmbH |
| 2,2,4-Trimethyl-1,2-dihydro-chinolin polymerisiert | | VULKANOX HS/LG | LANXESS Deutschland GmbH |
| Zinkoxid | | ZINKOXYD AKTIV | LANXESS Deutschland GmbH |
| Schwefel | | MAHLSCHWEFEL 90/95 CHANCEL | Solvay Deutschland GmbH |
| Mineralöl | | TUDALEN 1849-TE | Hansen&Rosenthal KG |
| Dicyclohexylbenzothiazyl-sulfenamid | | VULKACIT DZ/EGC | LANXESS Deutschland GmbH |
| DBzBS | | | LANXESS Deutschland |
| Melaminformaldehydether als Kondensationsprodukt aus Melamin, Formaldehyd, Methanol auf Füllstoff (50 %) | | COHEDUR A250 | LANXESS Deutschland GmbH |
| Resorcin und Stearinsäure (2:1) | | COHEDUR RS | LANXESS Deutschland GmbH |

| | | | |
|---|---|---|---|
| Erf. = erfindungsgemäß StdT = Stand der Technik Mengenangaben in phr (Gewichtsteile pro 100 Teile Kautschuk) | | | |

Zur Bestimmung der Eigenschaften von Kautschukmischung bzw. Vulkanisaten wurden folgende Messmethoden angewandt:

### Scorch-Verhalten (Anvulkanisationszeit t3 und t5):

Des Weiteren kann mit der gleichen Prüfung wie oben beschrieben auch das Scorch-Verhalten einer Mischung gemessen werden. Die gewählte Temperatur betrug 130°C. Der Rotor lief solange, bis der Drehmomentswert nach Durchlaufen eines Minimums auf 5 Mooney-Einheiten relativ zum Minimumswert angestiegen war (t5). Je größer der Wert ist (Einheit Sekunden), umso langsamer findet die Anvulkanisation statt. In der Praxis ist meist eine Anvulkanisationszeit von mehr als 300 Sekunden vorteilhaft, welche unter Berücksichtigung von Verarbeitungssicherheit und Zeitaufwand aber weniger als 1000 Sekunden betragen sollte.

### Weiterreißwiderstand(gemäß DIN 53515):

Die Kraft, die ein Vulkanisat mit einer Schnittverletzung dem Weiterreißen entgegensetzt, bezeichnet man als den Weiterreißwiderstand. Er wurde in N/mm ausgedruckt und mit einer Zugprüfmaschine nach der "Winkelprobe nach Graves" (DIN 53515) Methode ermittelt.

### Die Bestimmung der Rückprallelastiziät erfolgte gemäß DIN 53512.

Die Messergebnisse der Mischungen sind in Tabelle 3 zusammengefasst.

**Tabelle 3: Zusammenstellung der Ergebnisse**

| Parameter | Einheit | DIN | Referenz | Kautschukrezeptur 1 | Kautschukrezeptur 2 |
|---|---|---|---|---|---|
| Mooney Anvulkanisation bei 130°C (t3) | sec | DIN 53523-4 | 753 | 876 | 830 |
| Mooney Anvulkanisation bei 130°C (t5) | sec | DIN 53523-4 | 841 | 997 | 941 |
| | | | | | |
| Weiterreißwiderstand | N/mm | 53515 | 41,7 | 45,2 | 45,9 |
| Rückprallelastizität bei 23°C | % | 53512 | 40 | 40 | 41 |

Tabelle 4 zeigt die Ergebnisse der Netzknotenstrukturanalyse bei gleicher, molarer Beschleunigerkonzentration in Naturkautschuk (tmax, 150°C; 1,7 phr Schwefel).

**Tabelle 4:**

| Parameter | Einheit | Referenz | Kautschukrezeptur 1 |
|---|---|---|---|
| Mono-sulfidische Netzknoten | % | 4 | 12 |
| Di-sulfidische Netzknoten | % | 38 | 34 |
| Poly-sulfidische Netzknoten | % | 58 | 55 |

Die Netzknotenstrukturanalyse durch die Thiol-Amin-Methode (nach Saville and Watson; 1967) beruht auf der selektiven Spaltung der unterschiedlichen Schwefelbrücken durch verschiedene Reagenzien. Um die drei Arten von Netzknoten untereinander zu unterscheiden, benötigt man zwei Thiole unterschiedlicher Selektivität. Zur Spaltung ausschließlich polysulfidischer Schwefelbrücken fand eine 0,5 molare Lösung von i-Propanthiol und Piperidin in n-Heptan Anwendung. Eine 1 molare Lösung von n-Hexanthiol und Piperidin in n-Heptan wurde zur Spaltung von di- und polysulfidischen Netzknoten gleichzeitig benutzt. Die monosulfidischen Verknüpfungen reagierten im Rahmen der Abbauzeiten nicht mit den eingesetzten Reagenzien.

Die Netzknotenstrukturanalyse des DCBS-Systems ergab für das erfindungsgemäße Vulkanisat mit einem Umsatz von 100 % (tmax) hauptsächlich polysulfidische Vernetzungsstellen (58 %) und einen Anteil von 38 % für die disulfidischen Netzknoten sowie 4 % monosulfidische Netzknoten.

Überraschenderweise bildet das DBzBS (N,N-Dibenzyl-2-benzothiazylsulfenamid) auch wenig monosulfidische Netzwerkstellen und vergleichbar viele di- sowie polysulfidische Netzknoten.

Durch die auffällig längere Scorch Time von DBBS zu DCBS (s. Tabelle 3) ist die Vulkanisation und damit die Bildung der Schwefelbrücken zwischen den einzelnen Kautschukketten verlangsamt, so dass sich das Gummi gut über Cu-Sx-C-Brücken an der Metall-Legierung verankern kann. Dies garantiert eine sichere Verwendung von DBBS als Vulkanisationsbeschleuniger bei der Reifenherstellung.

Die Ergebnisse der Messungen zeigen, dass die erfindungsgemäße Haftmischung eine deutliche Verbesserung des Anvulkanisationsverhalten (länge Anvulkanisationszeit bei 130°C) aufweist. Das hat den besonderen Vorteil, dass die Fließzeit der Mischung einen genügend weiten Spielraum für die Reaktion der Formeldehyd-Abspaltung bzw. für die Harzbildung lässt, damit die Bindung zustande kommen kann.

Des Weiteren wurden physikalische Eigenschaften, wie Rückprallelastizität sowie Widerstand gegen Weiterreißen, verbessert bei vergleichbaren anderen physikalischen Parametern, wie Modul 300 und Zugfestigkeit.

## Patentansprüche

1. Haftmischung enthaltend
- Resorcin und/oder Resorcinester der Formel (I) 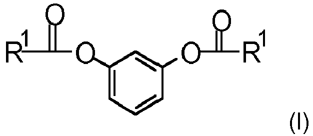 worin
alle Reste R¹ gleich oder verschieden sind und Wasserstoff, einen geradkettigen oder verzweigten C₁-C₁₈-Alkylrest oder einen Phenylrest, vorzugsweise Methyl oder Stearyl bedeuten,
und
- mindestens einen Melaminformaldehydether der Formel (II) 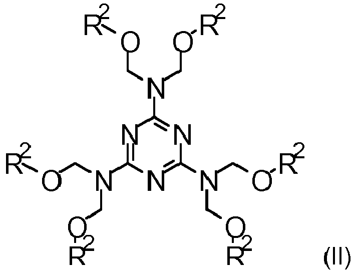 worin
alle Reste R² gleich oder verschieden sind und Wasserstoff oder einen geradkettigen oder verzweigten C₁-C₄-Alkylrest oder einen Phenylrest, bevorzugt Wasserstoff oder Methyl, besonders bevorzugt Methyl bedeutet, wobei aber nicht mehr als 5, vorzugsweise nicht mehr als 4, besonders bevorzugt nicht mehr als 3, ganz besonders bevorzugt nicht mehr als 2 und meist bevorzugt nicht mehr als 1 Rest R² für Wasserstoff steht
und/oder Polymere der Melaminformaldehydether der Formel (II),
- mindestens einem Sulfenamid der Formel (III) 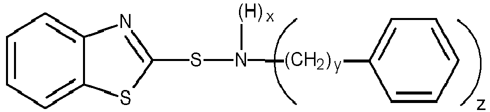 mit x = 0 oder 1 und z = 1 oder 2, wobei z und x in Summe = 2 sind und
y = 1 - 4,
- mindestens einen kieselsäurebasierenden Füllstoff, bevorzugt Fällungskieselsäure oder pyrogene Kieselsäure, besonders bevorzugt Fällungskieselsäure.

2. Haftmischung gemäß Anspruch 1, **dadurch gekennzeichnet, dass** es sich bei dem Sulfenamid der Formel (III) um eine Verbindung handelt, in der x=0, y=1 und z = 2 ist.

3. Haftmischung gemäß einem der Ansprüche 1 bis 2, **dadurch gekennzeichnet, dass** der Gesamtanteil an Resorcin und/oder Resorcinestern der Formel (I), Melaminformaldehydethern der Formel (II) und/oder Polymeren 20 - 80 Gew.%, insbesondere 25 - 55 Gew.% und der Anteil an Sulfenamid der Formel (III) 0,1 - 10 Gew%, bezogen auf die gesamte Haftmischung beträgt.

4. Haftmischung gemäß einem der Ansprüche 1 bis 3, **dadurch gekennzeichnet, dass** die Mischung zusätzlich Natur- und/oder Synthesekautschuke, vorzugsweise Naturkautschuk und/oder Synthesekautschuke ausgewählt aus der Gruppe enthaltend Polybutadien, Butadien/Acrylsäure-C₁-C₄-alkylester-Copolymerisat, Polychloropren, Polyisopren, Styrol/ Butadien-Copolymerisaten mit Styrolgehalten von 1 - 60 Gew-%, Isobutylen/Isopren-Copolymerisate, Butadien/Acrylnitril-Copolymerisate mit Acrylnitrilgehalten von 5 - 60 Gew.-%, teilhydrierter und vollständig hydrierter NBR-Kautschuk und Ethylen/Propylen/ Dien-Copolymerisate, und Mischungen daraus enthält.

5. Verfahren zur Herstellung der Haftmischung nach Anspruch 4, **dadurch gekennzeichnet, dass**
- zunächst der kieselsäurebasierende Füllstoff mit Melaminformaldehydether(n) der Formel (II) und/oder Polymeren davon und anschließend mit Resorcin und/oder Resorcinester(n) der Formel (I) beaufschlagt, oder
- der kieselsäurebasierende Füllstoff gleichzeitig mit Melaminformaldeyhdether(n) der Formel (II) und/oder Polymeren davon und Resorcinester(n) der Formel (I) beaufschlagt, oder
- zuerst der kieselsäurebasierende Füllstoff gleichzeitig mit Resorcinester(n) der Formel (I) vorgelegt und anschließend mit Melaminformaldeyhdether(n) der Formel (II) und/oder Polymeren davon beaufschlagt, oder
- der kieselsäurebasierende Füllstoff mit einer Mischung aus Melaminformaldehydether(n) der Formel (II) und/oder Polymeren davon und Resorcinester(n) der Formel (I) beaufschlagt, oder
- Resorcinester der Formel (I) und Melaminformaldeyhdether der Formel (II) und/oder Polymere davon jeweils separat mit dem kieselsäurebasierenden Füllstoff gemischt und anschließend die Mischungen vereint werden und im Anschluss dieser mit dem Sulfenamid der Formel (III) in den Kautschuk zumischt werden.

6. Verwendung der Haftmischung gemäß einem der Ansprüche 1 bis 4 als Haftvermittler in Kautschukmischungen, bevorzugt in mit Schwefel vernetzbaren Kautschukmischungen, besonders bevorzugt in Natur- und/oder in Synthesekautschuke-enthaltenden Kautschukmischungen.

7. Vulkanisate erhältlich durch Vulkanisation von Haftmischung gemäß Anspruch 4, bei Massetemperaturen von 100 bis 200°C, bevorzugt bei Massetemperaturen von 130 bis 180°C.

8. Verfahren zur Herstellung von Vulkanisaten nach Anspruch 7, **dadurch gekennzeichnet, dass** Haftmischung gemäß Anspruch 4, bei Massetemperaturen von 100 bis 200°C, bevorzugt bei Massetemperaturen von 130 bis 180°C vulkanisiert werden.

9. Verbundartikel enthaltend Vulkanisate gemäß Anspruch 7.

10. Verbundartikel nach Anspruch 9, **dadurch gekennzeichnet, dass** es sich dabei um Reifen, Förderbändern, Riemen aller Art, Keilriemen, verstärkte Schläuche, Feuerwehrschläuche oder beschichtete Gewebe handelt.
